# EUROPÄISCHE PATENTSCHRIFT

(11) **EP 2 708 659 B1**
(45) Veröffentlichungstag und Bekanntmachung des Hinweises auf die Patenterteilung: **15.11.2017**
(21) Anmeldenummer: 13176396.3
(22) Anmeldetag: 12.07.2013
(51) Int. Cl.: E02D 27/42, E02B 17/00, F03D 13/20, F03D 13/35

(54) **Justierbarer Flansch für einen Turm einer Windkraftanalge**
Adjustable flange for a tower of a wind power system
Bride réglable pour une tour d'une installation éolienne

(30) Priorität: 27.08.2012 DE 102012016843
(43) Veröffentlichungstag der Anmeldung: 19.03.2014
(73) Patentinhaber: Siegthalerfabrik GmbH, 57080 Siegen (DE)
(72) Erfinder: Wolf, Dietmar, 57234 Wilnsdorf (DE); Reifenrath, Michael, 57572 Harbach (DE)
(74) Vertreter: Bendel, Christian

(56) Entgegenhaltungen:
- DE-A1- 1 802 563
- DE-A1-102011 052 845
- DE-U- 1 695 629

## Beschreibung

Die Erfindung betrifft einen Flansch für einen Turm einer Windkraftanlage nach dem Oberbegriff des Anspruchs 1 sowie einen Turm einer Windkraftanlage mit einem erfindungsgemäßen Flansch und ein Verfahren zur Herstellung einer Windkraftanlage.

Aus der Praxis des Baus von Windkraftanlagen sind Türme bekannt, bei denen ringförmige Flanschteile an rohrförmige Abschnitte des Turms angeschweißt sind. Mittels der Flanschteile werden die einzelnen Abschnitte der Türme untereinander verbunden oder es erfolgt die Verbindung mit einer Turmbasis oder mit einem Turmkopf.

DE 10 2011 052 845 A1 beschreibt einen Turm für eine Windkraftanlage, bei dem ein Schiefstand eines unteren Rohrteils gegenüber der Senkrechten dadurch kompensiert wird, dass zumindest ein Flanschring an einem oberen Rohrteil mit einer Neigung gegenüber einer Mittelachse des oberen Rohrteils an dem oberen Rohrteil verschweißt wird.

Es ist die Aufgabe der Erfindung, einen Flansch anzugeben, der eine einfache Montage einer Windkraftanlage ermöglicht.

Diese Aufgabe wird für einen eingangs genannten Flansch erfindungsgemäß mit den kennzeichnenden Merkmalen des Anspruchs 1 gelöst. Durch die wählbare Orientierung des zumindest einen Ringteils mit seinen geneigten Oberflächen kann dabei eine Neigung zwischen einer Achse der ersten Struktur und einer Achse der zweiten Struktur zumindest in gewissen Umfang kompensiert werden.

Dies kann zum Beispiel bei Offshore-Windkraftanlagen eine Kosten und Zeit sparende Maßnahme darstellen. Bei Offshore-Anlagen wird regelmäßig eine Turmbasis in einem Gewässergrund verankert, wonach weitere Turmteile und zuletzt der Windgenerator montiert werden. Die Verankerung der Turmbasis erfolgt meist von schwimmenden Montageplattformen und führt häufig zunächst zu einer schiefen bzw. bezüglich der Senkrechten ungenügend orientierten verankerten Turmbasis. Es ist für solche Fälle bekannt, einen aufwendigen Korrekturschritt durchzuführen, indem die bereits verankerte Basis durch hohe Kräfte, z.B. mit Spezialschiffen, hydraulischen Großgeräten etc., nachjustiert werden muss. Durch Verwendung eines erfindungsgemäßen Flansches in der Konstruktion des Turmes kann ein solcher Schiefstand innerhalb des Turmes kompensiert werden. Zumindest kann der Toleranzbereich für den Schiefstand der Turmbasis erheblich erweitert werden, was die Montage des Turmes wesentlich vereinfacht.

Grundsätzlich kann ein erfindungsgemäßer Flansch aber auch für landgestützte Windkraftanlagen Verwendung finden. Hierdurch können zu geringen Kosten Toleranzbereiche für Schiefstände von Fundamenten und/oder Turmteilen vergrößert werden.

Durch die Verwendung eines geschlossenen Ringteils zum Ausgleich des Schiefstandes kann der Flansch auf einfache Weise umlaufend wetterdicht ausgebildet sein.

Ein Ringteil eines erfindungsgemäßen Flansches ist in bevorzugter Detailgestaltung kreisringförmig. Bei anderen Ausführungsformen kann aber auch ein polygonal geformtes Ringteil, zum Beispiel als Achteck, Zwölfeck etc. vorliegen. Bestimmte Türme für Windkraftanlagen werden mit polygonalen Querschnitten hergestellt, für die solche polygonalen Ringteile zweckmäßig verwendbar sind.

Bei einer einfachen Realisierung der Erfindung kann der Schiefstand mit nur einem Ringteil mit zueinander geneigten Oberflächen ausgeglichen werden. Hierzu muss die Neigung der Oberflächen des Ringteils der Größe des Schiefstandes entsprechen, so dass die Richtung des Schiefstandes noch durch die Wahl der Orientierung des Ringteils einzustellen ist. In der Praxis könnte hierzu ein Satz von verschiedenen Ringteilen mit verschiedenen Winkeln bereit gehalten werden.

Eine allgemein bevorzugte Gestaltung der Erfindung sieht dagegen vor, zumindest zwei Ringteile zu verwenden, die übereinander angeordnet sind. Eine unmittelbare Stapelung der Ringteile aufeinander ist dabei nicht notwendig, kann aber zweckmäßig sein. Bei einer solchen Anordnung kann ein Schiefstand durch geeignete Wahl der Orientierungen jedes der Ringteile sowohl bezüglich der Richtung als auch der Größe des Schiefstandes kompensiert werden. Die maximale Winkelgröße, bis zu der ein Schiefstand korrigierbar ist, folgt aus der genauen Formgebung der Ringteile, insbesondere der Neigungswinkel ihrer Oberflächen. Sofern nachfolgend "zumindest ein" Ringteil des erfindungsgemäßen Flansches benannt wird, ist jeweils besonders vorteilhaft das Vorsehen von zumindest zwei Ringteilen möglich.

Falls die Ringteile nicht wie bevorzugt kreisförmig, sondern polygonal ausgebildet sind, so können Schiefstände zweckmäßig um Stufen von Winkeln korrigiert werden, die der polygonalen Form der Ringteile entsprechen, also zum Beispiel eine Drehung der Ringteile um eine kleinste Stufe von 360°:12 = 30° bei einer zwölfeckigen Ausführung der Ringteile.

Unter der ersten Struktur und der zweiten Struktur sind im Sinne der Erfindung grundsätzlich sämtliche Bauteile des Turmes zu verstehen, die übereinander angeordnet sind. Die erste Struktur des Turmes kann zum Beispiel eine Turmbasis sein, worunter auch ein Fundament des Turmes verstanden wird. Eine solche Turmbasis kann je nach Ausgestaltung auch einen rohrförmigen Abschnitt als Anschluss für die weiteren Turmteile haben. Die zweite Struktur kann zum Beispiel ein rohrförmiger Abschnitt des Turmes sein, der auf den ersten Abschnitt aufgebaut ist.

Bei einer erfindungsgemäßen Ausführungsform der Erfindung ist das zumindest eine Ringteil zwischen zwei Flanschringen angeordnet, wobei der erste Flanschring an der ersten Struktur und der zweite Flanschring an der zweiten Struktur festgelegt ist. Dies ermöglicht Orientierung des Ringteils oder der mehreren Ringteile gegenüber den Strukturen. Bei Vorliegen von zwei oder mehr Ringteilen kann unabhängig von einer gewählten Orientierung der Strukturen in Drehrichtung ein Schiefstand der Richtung und der Größe nach kompensiert werden. Die Flanschringe sind dabei an den auszurichtenden Strukturen festgelegt, zum Beispiel mittels Verschweißung. Diese Anordnung kann zum Beispiel als an sich herkömmlicher Flansch ausgebildet sein, bei dem die Ringteile zwischen die Flanschringe gelegt werden.

Bevorzugt sind die Flanschringe kreisförmig. Bei einer möglichen polygonalen Form des Turmes sind die Flanschringe wie auch die Ringteile zweckmäßig polygonal geformt.

Bei einer möglichen Weiterbildung können die Ringteile als optionale, aber nicht notwendige Einlage zwischen den Flanschringen vorgesehen sein. Somit bräuchte auf die Ringteile nur im Fall eines eine Toleranz überschreitenden Schiefstandes zurückgegriffen werden, und die Ringteile könnten im Fall einer bereits ausreichenden Ausrichtung der Strukturen zur Kostenersparnis weggelassen werden.

Bei vorbekannten Ausführungsformen gemäß der eingangs genannten DE 10 2011 052 845 A1 ist zumindest eines der Ringteile unmittelbar an einer der Strukturen festgelegt, zum Beispiel mittels Verschweißung. Wenn zum Beispiel die Drehorientierung einer der Strukturen irrelevant ist, zum Beispiel im Falle eines sonst drehsymmetrischen, rohrförmigen Turmabschnitts, dann kann die gesamte Struktur mit dem Ringteil und seiner geneigten Oberfläche in eine erste gewünschte Orientierung gedreht werden. Das zweite Ringteil kann dann in eine zweite gewünschte Orientierung gedreht werden, um die weitere Kompensation der Neigung zu erzielen. Bei einer solchen Anordnung nach dem Stand der Technik sind die fest angeordneten Ringteile als Flanschringe mit einer geneigten Oberfläche ausgebildet

Allgemein vorteilhaft hat das zumindest eine Ringteil jeweils eine Mehrzahl von über seinen Umfang verteilten Durchbrechungen, mittels derer eine einfache Montage erfolgen kann. Bevorzugt durchgreift dabei ein Satz von Befestigungsgliedern, insbesondere Schrauben, die Durchbrechungen zur Festlegung der ersten Struktur an der zweiten Struktur. Anzahl und Abstände der Durchbrechungen und Schrauben können dabei an herkömmlichen Schraubflanschen orientiert sein. Grundsätzlich können die Ringteile zur Kostenersparnis auch ohne die Durchbrechungen ausgebildet sein. Bei einer solchen Ausführungsform könnte zum Beispiel ein Kranz von Schrauben, die angrenzende Flanschringe miteinander verbinden, an einem Außenumfang oder einem Innenumfang der Ringteile verlaufen, um diese so in radialer Richtung in Position zu halten. Bei wiederum anderen Ausführungsformen kann auf Durchbrechungen und/oder Befestigungsmittel verzichtet werden, wobei die Ringteile zum Beispiel nach ihrer Ausrichtung mit den angrenzenden Strukturen verschweißt werden.

In bevorzugter Weiterbildung einer Ausführungsform mit einer Mehrzahl von Befestigungsgliedern ist es bevorzugt vorgesehen, dass eine Mehrzahl von insbesondere hülsenförmigen Abstandsgliedern verschiedener Länge vorgesehen ist, wobei die Abstandsglieder an den Befestigungsgliedern angeordnet sind. Hierdurch lassen sich Distanzen zwischen den Befestigungsgliedern und Widerlagern auf einfache Weise kompensieren. Zum Beispiel werden erst nach Ausrichtung der Ringteile die benötigten Anzahlen von jeweiligen Schraubenlängen für eine Verschraubung bekannt. Andererseits sind die zur Verschraubung solcher Strukturen zulässigen Schrauben regelmäßig hochfeste Spezialschrauben, die aufgrund der Herstellungstechnik meist nur eine begrenzte Gewindelänge aufweisen. Bei Vorsehen eines entsprechenden Satzes von Abstandsgliedern bzw. einfachen Abstandshülsen kann eine Montage dennoch bei jeder Ausrichtung der Ringteile mit nur einer oder wenigen verschiedenen Schraubenlängen erfolgen.

Allgemein vorteilhaft ist es vorgesehen, dass der Winkel zwischen den zueinander geneigten Oberflächen des zumindest einen Ringteils zwischen 0,4 ° und 3° beträgt. Hierdurch kann ein praxisrelevanter Bereich von Schiefständen gut ausgeglichen werden.

Der erfindungsgemäße Flansch betrifft vor allem Großanlagen, weshalb ein bevorzugter Außendurchmesser des Ringteils wenigstens 4 Meter beträgt.

Allgemein vorteilhaft können zwei oder mehr Ringteile eines erfindungsgemäßen Flansches zur Kostenersparnis als Gleichteile ausgebildet sein.

Die Erfindung betrifft zudem einen Turm einer Windkraftanlage, umfassend einen erfindungsgemäßen Flansch. Besonders bevorzugt ist dabei die erste Struktur des Turms als in einem Gewässergrund verankerte Turmbasis und die zweite Struktur als ein oberhalb der Turmbasis erstreckter, insbesondere rohrförmiger Abschnitt des Turms ausgebildet. Beim Bau von in Gewässern verankerten Windkraftanlagen (Offshore-Windkraftanlagen) treten besonders häufig Probleme mit einer ausreichenden Ausrichtung der Turmbasis auf, so dass der erfindungsgemäße Flansch eine erhebliche Vereinfachung bei der Montage des Turms ermöglicht.

Die Erfindung betrifft zudem ein Verfahren zur Herstellung einer Windkraftanlage mit einem erfindungsgemäßen Turm nach einem der Ansprüche 8 oder 9, umfassend die Schritte:
a. Bereitstellen einer ortsfest verankerten Turmbasis mit einem oberen Anschlussglied;
b. Bestimmen einer Abweichung einer Ausrichtung des Anschlussgliedes bezüglich der Senkrechten;
c. Anbringen und Ausrichten des zumindest einen Ringteils zur Kompensation der in Schritt b. bestimmten Abweichung des Anschlussgliedes;
d. Anbringen eines Abschnitts des Turmes über dem Anschlussglied und dem Ringteil.

Bevorzugt werden zumindest zwei Ringteile verwendet, die in Schritt c. zur Kompensation der Abweichung sowohl nach Richtung als auch nach Größe positioniert werden.

Bei einer besonders bevorzugten Weiterbildung wird das zumindest eine Ringteil an einem Aufstellort des Turms bereit gehalten, bevor mit der Verankerung der Turmbasis begonnen wird. Dies erlaubt eine schnelle und unterbrechungsarme Montage von Türmen, insbesondere Offshore-Türmen. Häufig werden mehrere Türme eines Feldes von Windkraftanlagen parallel oder nacheinander gebaut. Es stellt in einer Mischkalkultaion einen großen logistischen und technischen Vorteil dar, wenn das Ringteil bzw. die zwei Ringteile bei Auftreten eines Schiefstandes einer Turmbasis sofort am Ort der Baustelle zur Verfügung stehen. Dabei ist weiter zu berücksichtigen, dass die Ringteile bei großen Turmdurchmessern nur langwierig von Spezialtransportern bewegt werden können. Die Anzahl der an der Baustelle bereit gehaltenen Ringteile oder Paare von Ringteilen kann von einer statistischen Häufigkeit des Auftretens von Schiefständen bzw. Korrekturerfordernissen abhängig gemacht werden.

Das Anschlussglied des Turmes kann ein beliebiges Bauteil sein, das einen zum weiteren Aufbau des Turms definierten Bereich aufweist. Zum Beispiel kann es sich bei einer Monopile-Bauweise der Turmbasis um ein Übergangsstück der Turmbasis handeln, das als oberen Abschluss einen Flanschring umfasst.

Der Turm der Windkraftanlage kann auf beliebige Weise ausgebildet sein, zum Beispiel als Rohrturm in Monopile-Bauweise, in Jacket-Bauweise, in Tripile-Bauweise oder auch in Tripod-Bauweise. Zweckmäßig liegt zumindest ein rohrförmiger Abschnitt vor, der mittels eines erfindungsgemäßen Flansches verbunden ist.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig.1: zeigt eine schematische Ansicht eines erfindungsgemäßen Offshore-Windturmes mit einer Turmbasis in Monopile-Bauweise.
- Fig. 2: zeigt eine Draufsicht auf zwei Ringteile eines erfindungsgemäßen Flansches.
- Fig. 3: zeigt eine Schnittansicht durch die Ringteile aus Fig. 2 entlang der Linie A-A in einer ersten Ausrichtung.
- Fig. 4: zeigt eine Schnittansicht durch die Ringteile aus Fig. 2 entlang der Linie A-A in einer zweiten Ausrichtung.
- Fig. 5: zeigt eine schematische, nicht maßstabsgerechte Schnittansicht eines erfindungsgemäßen Flansches in einem montierten Zustand.

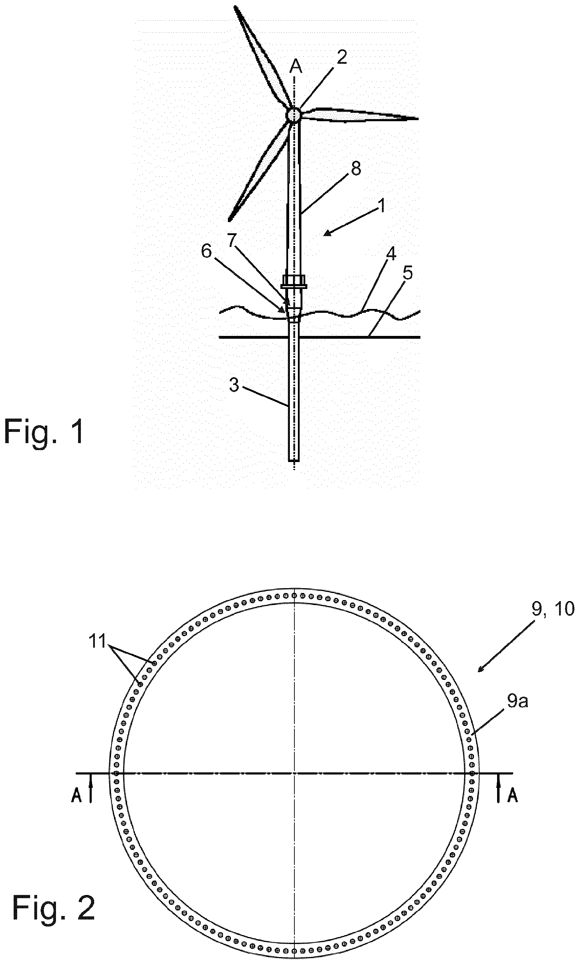

Die in Fig. 1 gezeigte Windkraftanlage umfasst einen Turm 1, auf dessen oberes Ende ein Windgenerator 2 aufgesetzt ist. Der Turm 1 umfasst eine Turmbasis 3, mit der er unterhalb einer Wasseroberfläche 4 in einem Gewässerboden bzw. Meeresboden 5 verankert ist. Sofern nicht anders bezeichnet, bestehen die nachfolgend beschriebenen Bauteile aus Stahl.

Die Verankerung erfolgt vorliegend durch Einrammen eines Rohres der Turmbasis in den Meeresboden, wonach das überstehende Rohr mit Füllmittel wie etwa Beton gefüllt und ein Übergangsstück 6 (Fachbegriff: Transition Piece) als Bestandteil der Turmbasis aufgesetzt wird. Durch das Rohr mit dem Übergangsstück 6 wird insgesamt eine erste, untere Struktur des Turmes 1 ausgebildet, die je nach Verlauf des Eintreibvorgangs einen Schiefstand gegenüber der Senkrechten bzw. Schwerkraftrichtung aufweisen kann.

Über dem Übergangsstück 6 der Turmbasis 3 wird dann der weitere Turm aufgebaut, der vorliegend einen rohrförmigen Abschnitt 8 als eine zweite, obere Struktur aufweist. Zuletzt wird der Windgenerator 2 aufgebaut.

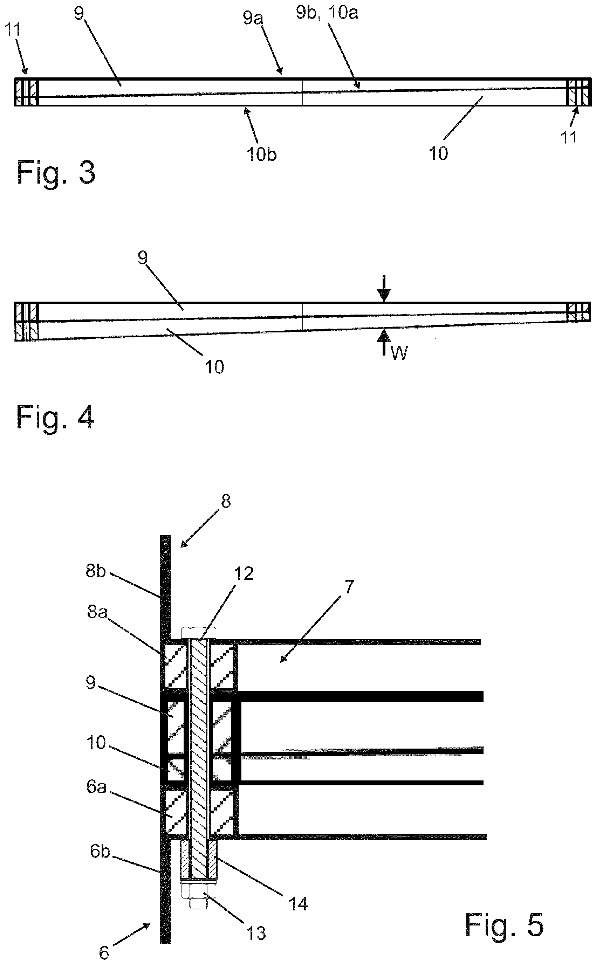

Zwischen der ersten Struktur 3 und der zweiten Struktur 8 ist ein Flansch 7 (siehe auch Fig. 5) angeordnet, der die beiden Strukturen unter Korrektur des Schiefstandes miteinander verbindet. Insbesondere kann dadurch die zweite Struktur 8 eine senkrechte Ausrichtung trotz eines Schiefstandes der ersten Struktur 3 aufweisen.

Der Flansch 7 umfasst vorliegend einen ersten Flanschring 8a, der mit einer nach oben fortgesetzten Wand 8b des Rohrabschnitts 8 fest verschweißt ist. Ferner umfasst der Flansch 7 einen zweiten, unteren Flanschring 6a, der mit einer Wand 6b des Übergangsstücks 6 der Turmbasis 3 verschweißt ist.

Zwischen den Flanschringen 6a, 8a sind ein erstes Ringteil 9 und ein zweites Ringteil 10 angeordnet, wobei die Ringteile 9, 10 unmittelbar aufeinander aufliegen. Die Ringteile 9, 10 sind vorliegend als baugleiche Teile ausgebildet. Sie umfassen jeweils einen Ring aus Stahl mit einem Außendurchmesser von rund 6,5 m und einem Innendurchmesser von 6 m.

Fig. 2 bis Fig. 4 zeigen die aufeinander liegenden Ringteile 9, 10 im Detail. Die Ringteile sind keine zylindrischen Ringe, da eine obere Oberfläche 9a, 10a und eine untere Oberfläche 9b, 10b der Ringteile 9, 10 jeweils in zueinander geneigten Ebenen liegen. Der Neigungswinkel der Ebenen beträgt vorliegend etwa 1°. Demnach hat jedes der Ringteile eine Stelle kleinster axialer Dicke von vorliegend etwa 10 cm und eine Stelle größter Dicke von vorliegend etwa 21,3 cm.

In Fig. 3 sind die beiden Ringteile gegenläufig orientiert aufeinander gelegt. Die Neigungen der Oberflächen kompensieren sich dabei, so dass die obere Oberfläche 9a und die untere Oberfläche 10b des Stapels von Ringteilen parallel zueinander sind. Bei dieser Anordnung wird kein Schiefstand der Strukturen kompensiert, und die Ringteile haben allenfalls die Funktion eines Zwischenstücks. Je nach Anforderungen können die Ringteile in einem solchen Fall auch weggelassen werden, so dass die Flanschringe 6a, 8a unmittelbar aufeinander gesetzt werden.

In Fig. 4 ist eines der Ringteile im Vergleich zu Fig. 3 um 180° um eine zentrale Achse gedreht, so dass ein maximaler Neigungswinkel W der Oberflächen 9a und 10b zueinander von 2° resultiert. Entsprechend kann im vorliegenden Beispiel ein maximaler Schiefstand der Turmbasis 3 von 2° kompensiert werden, wobei im Prinzip sämtliche Zwischenwerte von 0° bis 2° einstellbar sind.

Im vorliegenden Beispiel haben sowohl die Flanschringe 6a, 8a als auch die Ringteile 9, 10 umlaufend gleich beabstandete Durchbrechungen bzw. Bohrungen 11, durch die Schrauben als Befestigungsmittel zum Anziehen des Flansches gesteckt sind. Entsprechend lassen sich die Ringteile 9, 10 im vorliegenden Beispiel nur in Vielfachen der Beabstandung der Schrauben verdrehen, was aufgrund der großen Anzahl von 132 Bohrungen 11 (= 2,7° Winkelabstand) ausreichend genau erfolgend kann.

Jeder der Flanschringe 6a, 8a ragt ausgehend von den zylindrischen Wänden 6b, 8b radial nach innen vor, wobei die Ringteile 9, 10 und die Flanschringe 6a, 8a bündig abschließen. Somit verläuft die Außenwand 6b, 8b des Turms auch im Bereich des Flansches 7 im Wesentlichen glatt.

Zur Festlegung des Flansches 7 sind durch die überdeckenden Bohrungen 11 der Flanschringe und Ringteile 6a, 8a, 9, 10 jeweils Schrauben 12 gesteckt und mit Muttern 13 verschlossen. Bei den Schrauben handelt es sich um hochfeste HV-Schrauben nach internationaler technischer Norm. Da diese Schauben nicht immer in beliebigen Größen zur Verfügung stehen, werden je nach Einstellung der Ringteile 9, 10 Abstandsglieder 14 in Form von Stahlhülsen eingesetzt.

Zweckmäßig werden vorkonfektionierte Sätze von Abstandsgliedern 14 bereitgestellt, um mit möglichst wenigen verschiedenen Längen von Schrauben 12 auszukommen.

Es versteht sich, dass je nach Anforderungen Dichtungsmittel zwischen den Bauteilen des Flansches vorgesehen sein können, um ein Eindringen von Seewasser in den Turm zu verhindern. Alternativ oder ergänzend können auch Verschweißungen der Flanschteile vorgesehen sein.

## Patentansprüche

1. Flansch für einen Turm einer Windkraftanlage, umfassend zumindest ein, insbesondere zwei um eine Achse (A) des Turms (1) orientierte Ringteile (9, 10),
wobei das zumindest eine Ringteil (9, 10) zwischen einer ersten, unterhalb des Ringteils angeordneten Struktur (3, 6) des Turms (1) und einer zweiten, oberhalb des Ringteils (9, 10) angeordneten Struktur (8) des Turms (1) angeordnet ist,
**dadurch gekennzeichnet,**
**dass** das Ringteil (9, 10) jeweils eine erste Oberfläche (9a, 10a) und eine gegenüberliegende zweite Oberfläche (9b, 10b) aufweist, wobei die Oberflächen (9a, 9b; 10a, 10b) in zueinander um einen Winkel geneigten Ebenen liegen,
wobei das zumindest eine Ringteil (9, 10) zur Einstellung einer Neigung der ersten Struktur (3, 6) zu der zweiten Struktur (8) verdrehbar positionierbar ist, und wobei das Ringteil (9, 10) zwischen zwei Flanschringen (6a, 8a) angeordnet ist, wobei der erste Flanschring (6a) an der ersten Struktur (3, 6) und der zweite Flanschring (8a) an der zweiten Struktur (8) festgelegt ist.

2. Flansch nach Anspruch 1, **dadurch gekennzeichnet, dass** das Ringteil (9, 10) eine Mehrzahl von über seinen Umfang verteilten Durchbrechungen (11) aufweist.

3. Flansch nach Anspruch 2, **dadurch gekennzeichnet, dass** ein Satz von Befestigungsgliedern (12, 13), insbesondere Schrauben, die Durchbrechungen (11) zur Festlegung der ersten Struktur (3, 6) an der zweiten Struktur (8) durchgreift.

4. Flansch nach Anspruch 3, **dadurch gekennzeichnet, dass** eine Mehrzahl von insbesondere hülsenförmigen Abstandsgliedern (14) verschiedener Länge vorgesehen ist, wobei die Abstandsglieder (14) an den Befestigungsgliedern (12, 13) angeordnet sind.

5. Flansch nach einem der vorhergehenden Ansprüche, **dadurch gekennzeichnet, dass** der Winkel zwischen den zueinander geneigten Oberflächen (9a, 9b; 10a, 10b) des Ringteils (9, 10) zwischen 0,4 ° und 3° beträgt.

6. Flansch nach einem der vorhergehenden Ansprüche, **dadurch gekennzeichnet, dass** ein Außendurchmesser des Ringteils (9, 10) wenigstens 4 Meter beträgt.

7. Turm einer Windkraftanlage, umfassend einen Flansch (7) nach einem der vorhergehenden Ansprüche.

8. Turm nach Anspruch 7, wobei die erste Struktur des Turms (1) als in einem Gewässergrund verankerte Turmbasis (3, 6) und die zweite Struktur als ein oberhalb der Turmbasis (3, 6) erstreckter, insbesondere rohrförmiger Abschnitt (8) des Turms (1) ausgebildet ist.

9. Verfahren zur Herstellung einer Windkraftanlage mit einem Turm (1) nach einem der Ansprüche 7 oder 8, umfassend die Schritte:
a. Bereitstellen einer ortsfest verankerten Turmbasis (3, 6) mit einem oberen Anschlussglied (6);
b. Bestimmen einer Abweichung einer Ausrichtung des Anschlussgliedes (6) bezüglich der Senkrechten;
c. Anbringen und Ausrichten des zumindest einen Ringteils(9, 10), insbesondere zweier Ringteile (9, 10), zur Kompensation der in Schritt b. bestimmten Abweichung des Anschlussgliedes (6);
d. Anbringen eines Abschnitts (8) des Turmes über dem Anschlussglied (6) und dem Ringteil (9, 10).

10. Verfahren nach Anspruch 9, **dadurch gekennzeichnet, dass** das zumindest eine Ringteil (9, 10) an einem Aufstellort des Turms bereit gehalten wird, bevor mit der Verankerung der Turmbasis (3, 6) begonnen wird.

## Claims

1. Flange for the tower of a wind turbine, comprising at least one, in particular two annular members (9, 10), the annular members being oriented about an axis (A) of the tower (1), wherein the at least one annular member (9, 10) is provided between a first structure (3, 6) of the tower (1) positioned below the annular member (9, 10) and a second structure (8) positioned above the annular member (9, 10),
**characterized in that**,
the annular member (9, 10) has a first surface (9a, 10a) and an opposing second surface (9b, 10b) respectively, the surfaces (9a, 9b, 10a, 10b) being in planes which are mutually inclined by an angle,
wherein the at least one annular member (9, 10) can be rotatably positioned in order to adjust an inclination between the first structure (3, 6) and the second structure (8), and wherein the annular member (9, 10) is positioned between two flange rings (6a, 8a), the first flange ring (6a) being attached to the first structure (3, 6) and the second flange ring (8a) being attached to the second structure (8).

2. Flange according to claim 1, **characterized in that** the annular member (9, 10) has a plurality of openings (11) being distributed about its circumference.

3. Flange according to claim 2, **characterized in that** a set of fixation members (12, 13), in particular screws, engage through the openings (11) in order to attach the first structure (3, 6) to the second structure (8).

4. Flange according to claim 3, **characterized in that** a plurality of spacing members (14) of different length, in particular formed as bushings, are provided, the spacing members (14) being arranged at the fixation members (12, 13).

5. Flange according to any of the preceding claims, **characterized in that** the angle between the mutually inclined surfaces (9a, 9b, 10a, 10b) is between 0.4° and 3°.

6. Flange according to any of the preceding claims, **characterized in that** an outer diameter of the annular member (9, 10) is at least 4 meters.

7. Tower of a wind turbine, comprising a flange according to one of the preceding claims.

8. Tower according to claim 7, wherein the first structure of the tower (1) is provided as a tower base (3, 6), the tower base (3, 6) being anchored to a bottom of a body of water, and wherein the second structure is provided as a section (8) of the tower (1), in particular in the form of a tube, the section (8) of the tower (1) extending above the tower base (3, 6).

9. Process for the manufacturing of a wind turbine with a tower (1) according to one of claims 7 or 8, comprising the steps:
a. Providing of a stationary anchored tower base (3, 6) with an upper connection member (6);
b. quantifying of a deviation of an alignment of the connection member (6) with respect to the verticality;
c. attaching and adjusting of the at least one annular member (9, 10), in particular two annular members (9, 10), in order to compensate for the deviation of the connection member (6) quantified in step b.;
d. attaching of a section (8) of the tower above the connection member (6) and the annular member (9, 10).

10. Process according to claim 9, **characterized in that** the at least one annular member (9, 10) is being kept ready at an installation place of the tower before the anchoring of the tower base (3, 6) is started.

## Revendications

1. Bride pour une tour d'une installation éolienne, comprenant
au moins une, en particulier deux pièces annulaires (9, 10) orientées autour d'un axe (A) de la tour (1),
dans laquelle l'au moins une pièce annulaire (9, 10) est agencée entre une première structure (3, 6) de la tour (1) agencée en-dessous de la pièce annulaire et une deuxième structure (8) de la tour (1) agencée au-dessus de la pièce annulaire (9, 10),
**caractérisée en ce que**
la pièce annulaire (9, 10) comprend respectivement une première surface (9a, 10a,) et une deuxième surface opposée (9b, 10b), dans laquelle les surfaces (9a, 9b ; 10a, 10b) se situent dans des plans inclinés d'un angle l'un par rapport à l'autre,
dans laquelle l'au moins une pièce annulaire (9, 10) est positionnable de manière à pouvoir tourner pour le réglage d'une inclinaison de la première structure (3, 6) par rapport à la deuxième structure (8), et dans laquelle la pièce annulaire (9, 10) est agencée entre deux brides annulaires (6a, 8a), dans laquelle la première bride annulaire (6a) est fixée à la première structure (3, 6) et la deuxième bride annulaire (8a) est fixée à la deuxième structure (8).

2. Bride selon la revendication 1, **caractérisée en ce que** la pièce annulaire (9, 10) comprend une pluralité de perçages (11) repartis sur sa circonférence.

3. Bride selon la revendication 2, **caractérisée en ce qu'**un ensemble de membres de fixation (12, 13), en particulier des vis, s'étend à travers les perçages (11) pour la fixation de la première structure (3, 6) à la deuxième structure (8).

4. Bride selon la revendication 3, **caractérisée en ce qu'**une pluralité de membres d'espacement (14), en particulier en forme de manchon, de différentes longueurs est prévue, dans laquelle les membres d'espacement (14) sont agencés sur les membres de fixation (12, 13).

5. Bride selon l'une des revendications précédentes, **caractérisée en ce que** l'angle entre les surfaces (9a, 9b ; 10a, 10b) de la pièce annulaire (9, 10) inclinées l'une par rapport à l'autre est entre 0,4° et 3°.

6. Bride selon l'une des revendications précédentes, **caractérisée en ce qu'**un diamètre extérieur de la pièce annulaire (9, 10) est d'au moins 4 mètres.

7. Tour d'une installation éolienne, comprenant une bride (7) selon l'une des revendications précédentes.

8. Tour selon la revendication 7, dans laquelle la première structure de la tour (1) est formée en une base de tour (3, 6) ancrée au fond de d'eau et la deuxième structure est formée en une section, en particulier de forme tubulaire de la tour (1), s'étendant au-dessus de la base de tour (3, 6).

9. Procédé pour la fabrication d'une installation éolienne comprenant une tour (1) selon l'une des revendications 7 ou 8, comprenant les étapes de :
a. fourniture d'une base de tour (3, 6) ancrée en position fixe avec un membre de raccord supérieur (6) ;
b. détermination d'une déviation d'une orientation du membre de raccord (6) par rapport à la verticale ;
c. mise en place et alignement de l'au moins une pièce annulaire (9, 10), en particulier deux pièces annulaires (9, 10), pour la compensation de la déviation du membre de raccord (6) déterminée à l'étape b. ;
d. mise en place d'une section (8) de la tour au-dessus du membre de raccord (6) et de la pièce annulaire (9, 10).

10. Procédé selon la revendication 9, **caractérisé en ce que** l'au moins une pièce annulaire (9, 10) est mise à disposition sur un lieu d'installation de la tour avant que l'ancrage de la base de tour (3, 6) est commencé.
